Europäisches Patentamt

European Patent Office

Office européen des brevets

(19)

(11) EP 0 849 444 A2

## (12) EUROPEAN PATENT APPLICATION

(43) Date of publication:
24.06.1998 Bulletin 1998/26

(51) Int Cl.6: **F01N 3/28**, F01N 3/02, B01D 46/24, B01D 39/20

(21) Application number: 97310130.6

(22) Date of filing: 16.12.1997

(84) Designated Contracting States:
**AT BE CH DE DK ES FI FR GB GR IE IT LI LU MC NL PT SE**
Designated Extension States:
**AL LT LV MK RO SI**

(30) Priority: **18.12.1996 JP 337829/96**

(71) Applicant: **SUMITOMO ELECTRIC INDUSTRIES, LTD.**
**Osaka-shi, Osaka 541 (JP)**

(72) Inventors:
  • **Ban, Syunsuke**
    **Itami-shi, Hyogo (JP)**

  • **Oji, Masataka**
    **Itami-shi, Hyogo (JP)**
  • **Yoro, Katsuhiko**
    **Itami-shi, Hyogo (JP)**
  • **Watanabe, Yoko**
    **Itami-shi, Hyogo (JP)**

(74) Representative: **Rackham, Stephen Neil**
**GILL JENNINGS & EVERY,**
**Broadgate House,**
**7 Eldon Street**
**London EC2M 7LH (GB)**

(54) **Particulate trap for a diesel engine**

(57)    In a diesel particulate trap, a filter (4), which is formed with a three-dimensional mesh-like structure porus body (fig. 13) made of a heat resistant metal or metal unwoven cloth, is placed in a case (1) containing therein a trap connected to an exhaust of a diesel engine. The filter surfaces of the filter are parallel to the direction of a flow of exhaust gas. The pore diameter, thickness, a material packing density or a mass diameter of the filter is varied in the lengthwise of the filter. With this unique structure, the flow velocity of the exhaust gas passing through the filter (4) is uniform over the entire length of the filter. Therefore the particulate collecting or trapping efficiency is improved. Further, the filter, when bearing catalyst thereon, has an additional function to remove poisonous gas components from the exhaust gas.

*FIG. 1*

EP 0 849 444 A2

## FIG. 2

## FIG. 6

## FIG. 13

THREE-DIMENSIONAL
MESH-LIKE STRUCTURE
POROUS BODY

MASS DIAMETER

## Description

The present invention relates to a filter structure for use in trapping and burning fine particles (referred to as particulates), e.g., carbon, and poisonous gas components, e.g., NOx and SOF, in exhaust gas from a diesel engine.

The exhaust gas from the diesel engine contains, for example, particulates and poisonous gases NOx, SOF (unburnt hydro-carbon), which are produced as a consequence of high temperature combustion. The exhaust gases, which form one of the major causes of air pollution creating serious social problems, are detrimental to human bodies and other life or living matters. One of the effective measures taken for the air pollution is to remove or satisfactorily reduce those harmful materials in the exhaust gases. For this reason, the social requires an urgent development of the techniques to effect the measure.

In the field of the diesel engines, known exhaust gas purifying techniques are the exhaust gas recirculation (EGR) technique, techniques on the improvement of the fuel injection system, the technique to trap and remove the harmful materials contained in exhaust gases, and the like.

A diesel particulate trap or filter (abbreviated as DPF) is disclosed in Japanese Patent Laid-Open Publication No. Sho-58-51235 and in the stage of practical use. To secure that the DPF exercises its normal functions for a long time, it is necessary to satisfy the following requirements.

A first requirement is that the DPF has a particulate trapping or collecting efficiency high enough to satisfy a required degree of purification of the exhaust gas. An amount of particulates exhausted from the diesel engine varies depending on a stroke volume and a load of the engine, and further a measure taken for the exhaust gas purification. It is desirable to collect the amount of the particulates of at least 60% or higher in average with respect to the total stroke volume.

A second requirement is that a pressure loss is as low as possible. When a back pressure of the exhaust gas is high, a load is applied to the engine per se. Therefore, it is essential to maintain an exhaust gas passing area well balanced with the particulate trapping performance so as to suppress a pressure loss, which results from the trapping of particulates. The pressure loss is preferably 30Kpa or less in a normal state. The material and structure of the DPF must be selected and designed so that, when the particulates are trapped, the initial pressure loss is low, and the DPF allows the exhaust gas to properly pass therethrough without increasing the pressure loss.

A third requirement is that the DPF has a proper regeneration capability. As the particulates are trapped by the filter of the DPF, the clogging of the filter progresses. To avoid the problem of the clogging, it is necessary to regenerate the filter by burning the particulates in the filter before the pressure loss exceeds a preset tolerable value. A regenerative means uses an electric heater or a gas oil burner. The means is required to be able to heat and burn the collected particulates at a low energy, and be used repeatedly.

A fourth requirement is that the DPF has a satisfactory durability. The DPF is exposed to corrosive and high temperature exhaust gas. Therefore, the DPF must be resistive to corrosion and high temperature. During the burning of the particulates, the DPF is put at a further high temperature, and at the stop of the engine, the DPF is at a low temperature. The DPF must be durable for such a heat shock, or a large variation of ambient temperature.

A fifth requirement is that the DPF is readily substitutable for the catalytic converter. It is convenient that the DPF has an ability to remove poisonous gas components from the exhaust gas during the burning process of the particulates. It is a common practice that to remove the poisonous gas components from the exhaust gas, the catalytic converter is installed in the engine exhausting system. Since the trap or filter of the DPF has also the catalytic function, there is no need of securing a space for the catalytic converter. This leads to cost reduction. The catalysis, which is to be applied to the trap of the DPF, must have good adhesion properties while being well compatible with the trap material, which is durable for the heat shock at the time of the regenerating process.

To satisfy the requirements mentioned above, the inventors of the present patent application have proposed various techniques. The technique to improve the regenerating efficiency is disclosed in Japanese Patent Laid-Open Publication No. Hei-6-257422. The technique to improve the energy efficiency in the regenerating process by combining a metal porous body and a ceramic porous body is disclosed in Japanese Patent Laid-Open Publication No. Hei-6-294313. The technique disclosed in Japanese Patent Laid-Open Publication No. Hei-7-731 provides an inventive and unique trap which is low in pressure loss and resistive to the heat shock, the trap being formed by filling fibers formed of a metal and having a mean fiber diameter of 5 to 40μm into pores of a foamed structure porous body. A composition of a high corrosion proof filter is disclosed in Japanese Patent Laid-Open Publication No. Hei-7-51522.

The metal trap still has the following problem. A flow of exhaust gas tends to be localized at a specific position in an initial stage of the particulate trapping. In other words, it is difficult to trap the particulates uniformly over the entire length of the trap.

It is difficult for the metal trap to satisfy the fifth requirement mentioned above. Therefore, an object of the present invention is to provide a trap material and/or trap structure satisfying the first to fourth requirements. Another object of the present invention is to select a catalyst capable of removing mainly SOF of the poisonous gas being highly compatible with the trap material for satisfying the fifth requirement.

To achieve the above object, there is provided a diesel particulate trap characterized in that a filter formed with a three-dimensional mesh-like structure porous body made of a heat resistant metal or a metal unwoven cloth. The filter is placed in a case connected to an exhaust pipe of a diesel engine so that the filter surfaces of the filter are parallel to the direction of a flow of exhaust gas. The thickness or a material packing density of the filter is increased in the direction from the gas inflow end of the filter to the terminal end thereof, or the pore diameter or the mass diameter of the filter is decreased in the same direction. With such structure, the exhaust gas goes into the filter and hits against a shield provided at the terminal of the filter and stays in a portion of the filter located downstream when viewed in the gas flowing direction, so that a gas pressure of the exhaust gas staying there impedes an increase of a velocity of gas flow in the filter. The result is that the flow velocity of the exhaust gas passing through The filter is uniform over the entire length of the filter ranging from the gas inflow port to the terminal, and hence a particulate collecting or trapping efficiency is improved.

The filter is formed of a three-dimensional mesh-like structure porous body made of Ni-Ci-Al. To provide catalyst convertor function, the filter may be coated with $\gamma$-alumina to form a catalyst bearing layer, and platinum (Pt) is uniformly layered over the catalyst bearing layer and sintered. The thus structured filter can remove the poisonous gas component from the exhaust gas without using a discrete catalyst converter, and is resistive to the heat shock at the time of regenerating the filter.

Examples will now be described with reference to the accompanying drawings; in which:-

Fig. 1 is a perspective view showing a DPF which is a first embodiment of the present invention.

Fig. 2 is a cross sectional view showing a structure of one of the filter elements contained in the DPF of Fig. 1.

Fig. 3 is a perspective view showing a DPF which is a second embodiment of the present invention.

Fig. 4 is a cross sectional view showing a structure of the filter contained in the DPF of Fig. 3.

Fig. 5 is a perspective view showing a DPF which is a third embodiment of the present invention.

Fig. 6 is a cross sectional view showing a structure of the filter element contained in the DPF of Fig. 5.

Fig. 7 is a perspective view showing a DPF which is a fourth embodiment of the present invention.

Fig. 8 is a perspective view showing a structure of the trap contained in the DPF of Fig. 7.

Fig. 9 is a cross sectional view showing a structure of the trap of Fig. 7.

Fig. 10 is a cross sectional view showing the concept of the filter constructed according to the present invention.

Fig. 11 is a cross sectional view showing the concept of a filter disclosed in Japanese Patent Laid-Open Publication No. Hei-6-257422.

Fig. 12 is a diagram showing a DPF performance evaluating system used for evaluating the performances of the DPFs.

Fig. 13 is an enlarged view showing a three-dimensional mesh-like structure porous body.

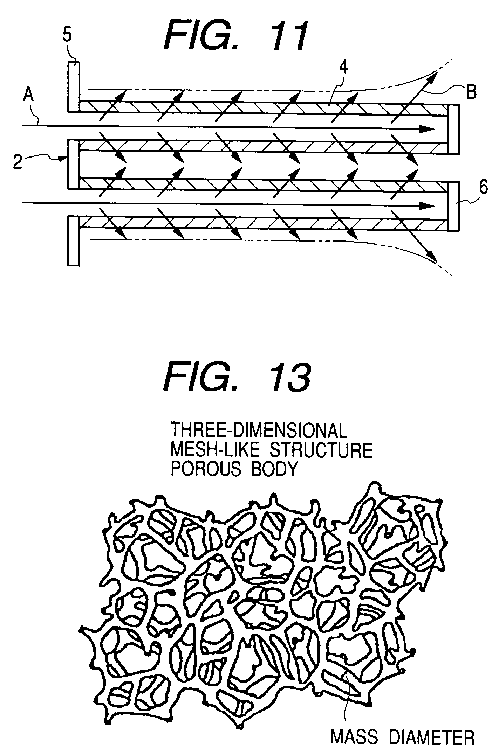

For better understanding of the present invention, the filter structure disclosed in Japanese Patent Laid-Open Publication No. Hei-6-257422 will first be described briefly with reference to Fig. 11. A trap 2 is formed with a plural number of cylindrical filters 4 arranged coaxially with one another in a multi-layer fashion. The ends of the coaxially arranged cylindrical filters, which will be the inflow end of the trap, except those defining the gas inflow ports are interconnected by doughnut-like shields 5, while the ends of the coaxially arranged cylindrical filters, which will be the outflow end of the trap, except those defining the gas outflow ports are interconnected by doughnut-like shields 6. In this filter structure, exhaust gas flows, through the inflow ports, into the spaces each between the adjacent cylindrical filters, and travels through the spaces in the direction of an arrow A, and finally hits against the doughnut-like shields 6 at the terminal of the filter structure and stays at and in the vicinity of the terminal. A velocity of the gas flow in each filter increases (as indicated by arrows B) as the gas approaches to the terminal of the filter structure, provided that a gas passing area of the filter structure is at a fixed value. The fact indicates that a particulate collection or trapping efficiency of the filter tends to be low in the initial stage of the particulate collection.

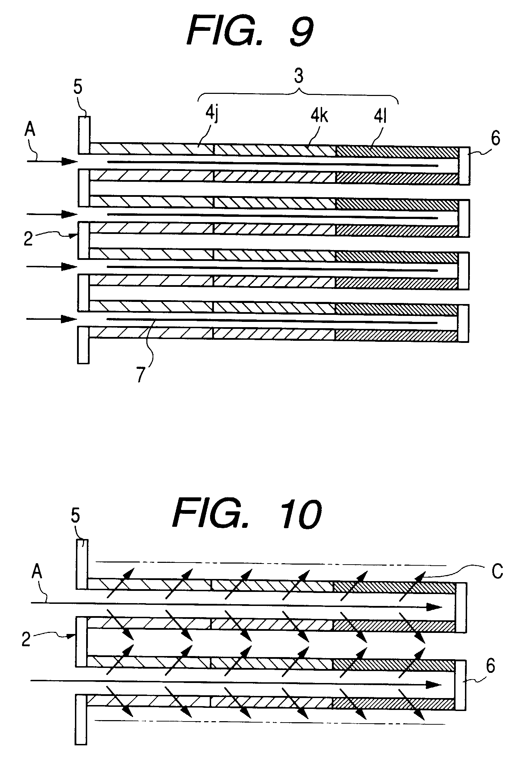

A filter structure constructed according to the present invention is illustrated in Fig. 10. As seen from the figure, a filter structure of the invention includes three filter elements 3 each consisting of a plural number of cylindrical filters arranged coaxially with one another in a multi-layer fashion. The inflow ends of the cylindrical filters except those defining the inflow ports are interconnected by doughnut-like shields 5 while the outflow ends of the cylindrical filter elements 3 except those defining the outflow ports are interconnected by doughnut-like shields 6. The filter structure of the invention is different from the one shown in Fig. 11 in that each cylindrical filter is made up of three segmental filters 4, and the metal packing densities of the segmental filters of each cylindrical filter are increased in the direction from the gas inflow end of the filter structure to the terminal end thereof or the pore diameters or the mass diameters of the segmental filters are decreased in the same direction. With this unique feature, a velocity of flow of gas passing through the filter structure is uniform over its entire length as indicated by arrows C. The result is that the particulate collecting or trapping efficiency of the filter structure is improved, and a pressure loss caused by the particulate trapping operation is continuously reduced.

A catalyst may be born by the filter consisting of a three-dimensional mesh-like structure porous body made of a heat-resistant metal. In the filter structure bearing the catalyst, the catalyst quickly follows a temperature variation in its operation on the exhaust gas since the thermal capacity of the filter structure is small. Therefore, the filter structure can efficiently purify the exhaust gas.

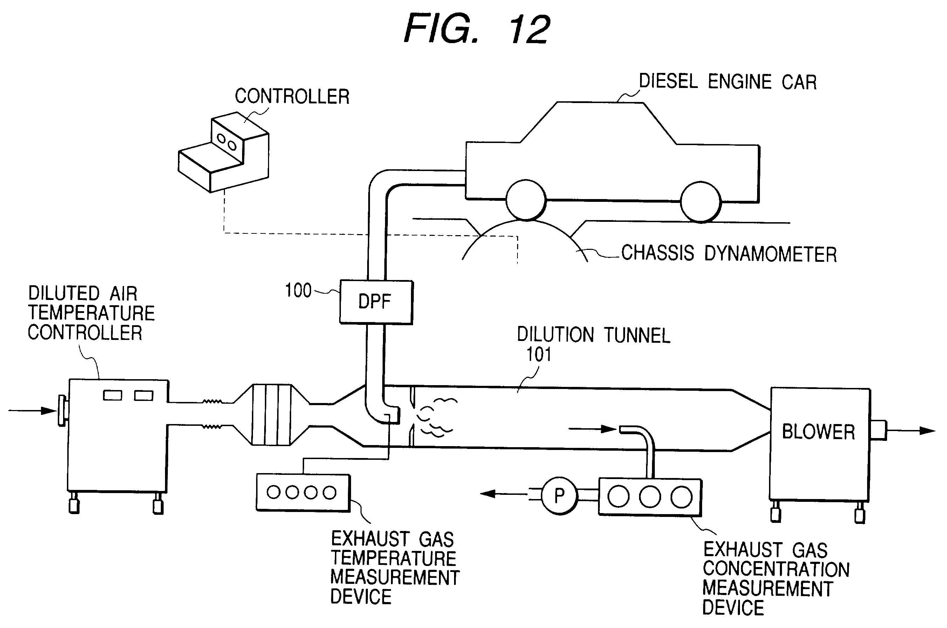

The preferred embodiments of the present invention will be described in details with reference to the accompanying drawings. The performances of four diesel particulates filters (DPFs) which are embodiments of the present invention whose operations and useful effects will be described hereunder, were empirically evaluated by use of a DPF performance evaluating system shown in Fig. 12. In the laboratory system for DPF performance evaluation, a motorcar having a 4-cylinder direct injection diesel engine of the piston displacement of 3400cc was mounted on a chassis dynamo meter. Exhaust gas of the motor car was introduced into a dilution tunnel 101. A DPF 100 is located at a mid position of the exhaust gas passage between the motorcar and the dilution tunnel 101.

<Embodiment 1>

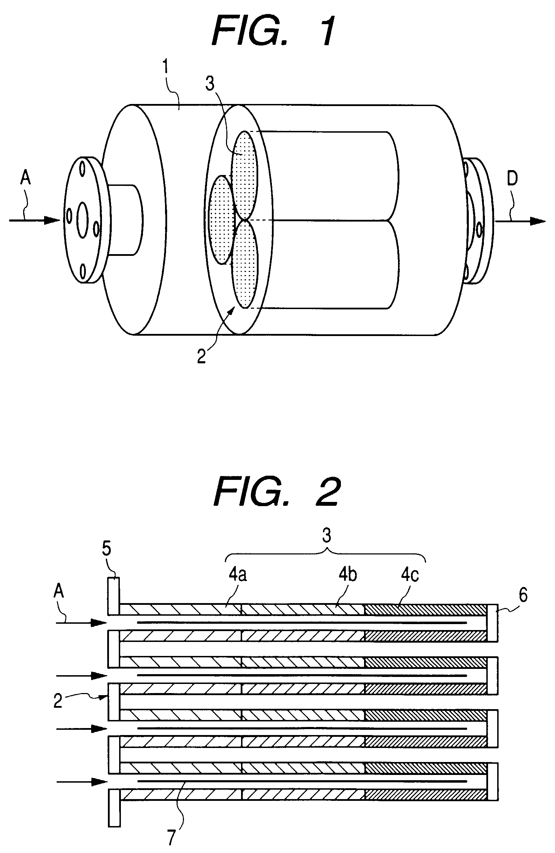

Fig. 1 is a perspective view showing a DPF which is a first embodiment of the present invention. Reference numeral 1 designates a case containing a trap 2 connected to an exhaust pipe of a diesel engine. Numeral 3 indicates a cylindrical filter element 3. The filter element consists of a plural number of cylindrical filters coaxially arranged in a multi-layer fashion. In the embodiment, the trap 2 is formed with three filter elements 3. These three filter elements 3 are combined so as to be tailored to the cylindrical shape of the case 1, thereby securing a good space utilization. Exhaust gas flows in the direction of an arrow A and passes through the filter elements 3. After purified by the filter elements 3, the exhaust gas is exhausted out of the DPF in the direction of an arrow D.

Fig. 2 is a cross sectional view showing a structure of one of the filter elements 3 of the trap 2 of the Fig. 1 DPF. As shown, each of the cylindrical filters consists of three segmental filters 4a, 4b and 4c. Those segmental filters are horizontally arranged side by side from the exhaust gas inflow port to the terminal while being contiguous to one other. Those filters 4a to 4c have different metal packing densities such that the filter 4a close to the gas inflow port has the smallest metal packing density, the filter 4c close to the terminal has the largest metal packing density, and the filter 4b located therebetween has a medium metal packing density. As will defined, the metal packing density means a density of filter material. In each filter element 3, the cylindrical filters are interconnected at the gas inflow ends thereof by doughnut-like shields 5 to control a flow of exhaust gas in the direction of the arrow A, while being interconnected at the terminal ends by doughnut-like shields 6. Reference numeral 7 represents a cylindrical electric heater formed with a thin metal plate. Each electric heater 7 is placed in a gap between the adjacent cylindrical filters while being spaced from the latter. The electric heater 7 heats the cylindrical filters located on both sides of the heater and directly heats the particulates which are trapped on the surfaces of the cylindrical filters. Therefore, a reduced amount of electric energy is consumed for burning the particulates.

The cylindrical filters of the filter elements are each preferably formed with a metal porous body of three-dimensional mesh structure, manufactured by the method described in Japanese Patent Publication No. Sho. 57-39317. Specifically, the porous body consists of Ni as a main constituent and Cr and Al, which are diffused into Ni. A metal mass of the porous body is 5μm to 100μm in thick, and the pore diameter of the same is 150μm to 400μm. Alternatively, the cylindrical filter may be formed with a metal unwoven cloth. To form the unwoven cloth, metal fibers are formed into a metal sheet, not woven, and the metal fibers of the sheet are interconnected by sintering or plating. In this case, the fiber diameter is within the range from 5μm to 100μm and the pore diameter is within the range from 2μm to 200μm. Practically, the material consists of SUS as a main constituent and Cr and Al, which are diffused into SUS for anticorrosion improvement, viz., Fe-Cr-Al, or Ni as a main constituent and Cr and Al, which are diffused into Ni for the same purpose, viz., Ni-Cr-Al.

The mass of the filter medium is coated with γ-alumina to form a catalyst bearing layer. In this case, γ-alumina of 150g is used for one liter of the filter medium. Platinum (Pt) as SOF catalyst is uniformly layered on the catalyst bearing layer. The SOF catalyst of 1.5g is used for each unit volume.

Here, the metal packing density means a density of the filter material per unit volume of the filter. A small metal packing density is equivalent to a high pore volume.

The mass thickness or mass diameter of the filter means a thickness or diameter of portions of a skeleton-like metal body of the metal filter as shown in Fig. 13. Fig. 13 shows a case where the metal filter is formed by three-dimensional mesh-like structure porous body.

To evaluate the performances of the DPF thus constructed, two test DPFs were manufactured: one is a DPF A having a trap constructed according to the present invention, viz., a trap having a structure consisting of a trio of filter elements (as shown in Fig. 2) arranged and disposed as shown in Fig. 1, and the other is a DPF B having a trap consisting of a filter 4 whose metal packing density is uniform over its entire length. Initial trapping efficiencies and SOF purification rates of those DFPs were measured by using the DPF performance evaluating system of Fig. 12. The metal packing densities of the segmental filters of each cylindrical filter or filter layer of each filter element of the DPF A and the metal packing density of the filter element of the DPF B are as shown in Table 1.

Table 1

| | Metal packing densities (%) | | |
|---|---|---|---|
| | Filter 4a | Filter 4b | Filter 4c |
| DPF A | 5 | 10 | 15 |
| DPF B | | 15 (uniform) | |

An initial trapping efficiency of the DPF is defined by

$$(C_i - C_o)/C_i \times 100,$$

where

Ci : Particulate concentration in exhaust gas before the DPF.
Co : Particulate concentration in exhaust gas after the DPF.

The initial particulate trapping efficiencies of those test DPFs A and B are comparatively shown in Table 2. As seen from the table, the initial particulate trapping efficiency of the DPF A of the invention is 62%, and the DPF successfully clears a target value of 60%. In this respect, the DPF of the invention satisfies the first requirement for the DPF. In the DPF of the invention, the metal packing density of the filter element is increased toward the terminal of filter element. In other words, the pore diameter or the mass diameter of the cylindrical filter is decreased toward the terminal of the filter element. With this unique feature, the exhaust gas passes through the filter element at a uniform velocity of gas flow.

Table 2

| | Initial Particulate Trapping Efficiency (%) |
|---|---|
| DPF A | 62 |
| DPF B | 50 |

Catalyst performances of the DPFs A and B when temperature of the exhaust gas is at 250°C and 350°C are shown in Table 3. The table shows that the DPF A of the invention, which uses the SOF catalyst, is capable of reducing the SOF concentration by 40% or 50%. From this, it is seen that when the DPF A of the invention is used for the exhaust gas purification, there is no need of using a catalytic converter. The DPF A realizes space saving and cost reduction, which form the fifth requirement for the DPF.

Table 3

| | SOF Purification Rate (%) | |
|---|---|---|
| | Exhaust gas temperature at 250° | Exhaust gas temperature at 350° |
| DPF A | 40 | 50 |
| DPF B (no catalyst) | 0 | |

<Embodiment 2>

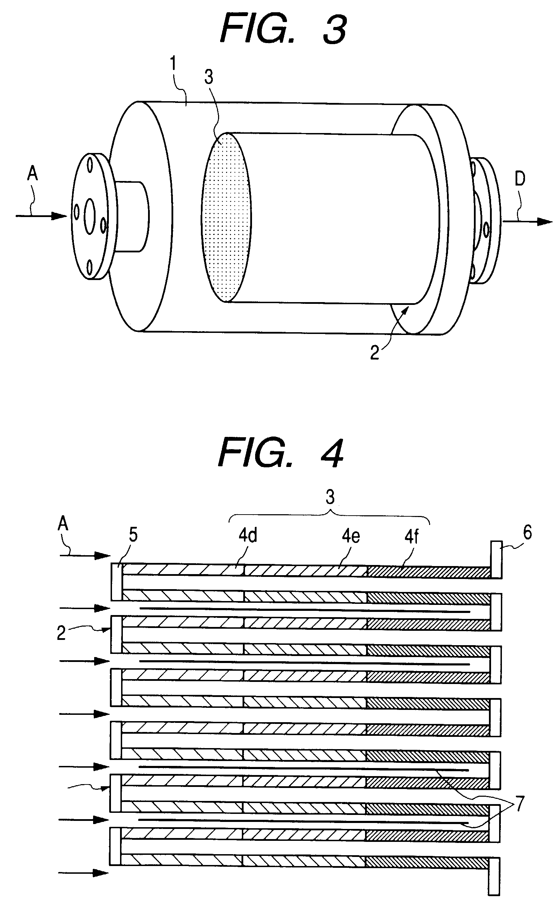

Fig. 3 is a perspective view showing a DPF which is a second embodiment of the present invention. Reference numeral 1 designates a case containing a trap 2 connected to an exhaust pipe of a diesel engine. Numeral 3 indicates a filter element 3. The trap 2 is formed with one filter element 3 in the embodiment. The filter element 3 is cylindrical in shape so as to be tailored to the cylindrical shape of the case 1, thereby securing the best space utilization. The filter element 3 consists of six cylindrical filters coaxially arranged in a multi-layer fashion. Cylindrical electric heaters 7 are each placed in a gap between the adjacent cylindrical filters, while being spaced from the latter. Exhaust gas flows in the direction of an arrow A and passes through the filter element 3. After purified by the filter element 3, the exhaust gas is exhausted out of the DPF in the direction of an arrow D.
Fig. 4 is a cross sectional view showing a structure of the filter element 3 consisting of six cylindrical filters coaxially arranged in a multi-layered fashion. Each cylindrical filter consists of three segmental filters 4d to 4f arranged side by side in this order from the gas inflow side to the gas outflow side. The mass diameters of those segmental filters 4d to 4f are selected such that the filter 4d has the largest mass diameter, the filter 4f has the smallest mass diameter, and the filter 4e has a medium mass diameter. Exhaust gas is guided to the inflow side of the filter element, which includes the doughnut-like shields 5 and the inflow ports, and passes, in the direction of arrow A, through the gaps each between the adjacent cylindrical filters each consisting of three segmental filters 4d to 4f, and hits on the doughnut-like shields 6 of the terminal and passes through the cylindrical filters of the filter element 3 to be discharged outside.

The cylindrical filters of the filter element is preferably formed with a metal porous body of three-dimensional mesh structure. Specifically, the porous body consists of Ni-C as a main constituent and Al, which is diffused into Ni-Cr.

To evaluate the performances of the DPF thus constructed, two test DPFs were manufactured: one is a DPF C having a trap constructed according to the present invention, viz., a trap having a filter element structured as shown in Fig. 3, and the other is a DPF D having a trap consisting of a filter 4 whose metal packing density is uniform over its entire length. Initial trapping efficiencies and SOF purification rates of those DFPs were measured by using the DPF performance evaluating system of Fig. 12. The mass diameters of the segmental filters of each cylindrical filter or filter layer of each filter element of the DPF C and the mass diameter of the filter element of the DPF D are as shown in Table 4.

Table 4

| | Mass Diameter (μm) | | |
|---|---|---|---|
| | Filter 4d | Filter 4e | Filter 4f |
| DPF C | 150 | 100 | 50 |
| DPF D | | 100 (uniform) | |

Initial trapping efficiencies of those test DPFs C and D as the results of the measurement are shown in Table 5. In the DPF C of the invention, the mass diameter of the filter element is increased toward the terminal of filter element. Therefore, a velocity of gas flow passing through the filter element is uniform over its entire length. As seen from the table, the DPF C of the invention successfully clears a target value of 60%. In this respect, the DPF of the invention satisfies the first requirement for the DPF.

Table 5

| | Initial Particulate Trapping Efficiency (%) |
|---|---|
| DPF C | 65 |
| DPF D | 50 |

<Embodiment 3>

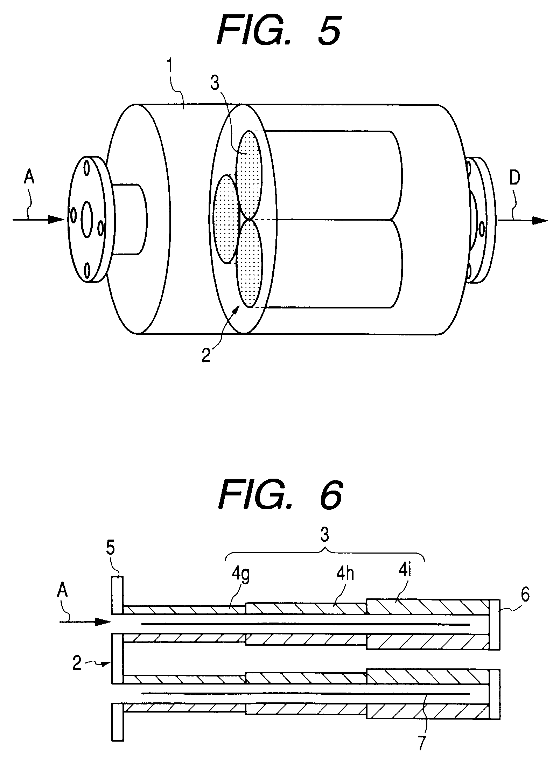

Fig. 5 is a perspective view showing a DPF which is a third embodiment of the present invention. Reference numeral 1 designates a case containing a trap 2 connected to an exhaust pipe of a diesel engine. Numeral 3 indicates a cylindrical filter element 3. The filter element consists of a plural number of cylindrical filters coaxially arranged in a multi-layer fashion. In the embodiment, the trap 2 is formed with three filter elements 3. These three filter elements 3 are combined so as to be tailored to the cylindrical shape of the case 1, thereby securing a good space utilization. Exhaust gas flows in the direction of an arrow A and passes through the filter elements 3. After purified by the filter elements 3, the exhaust gas is exhausted out of the DPF in the direction of an arrow D.

Fig. 6 is a cross sectional view showing a structure of one of the filter elements 3 of the trap 2 of the Fig. 5 DPF. As shown, each of the cylindrical filters consists of three segmental filters 4g, 4h and 4i. Those segmental filters 4g to 4i are horizontally arranged side by side from the exhaust gas inflow port to the terminal while being contiguous to one other. Those filters 4g to 4i have different thickness values such that the filter 4g is thin, the filter 4i is thick, and the filter 4h has a medium thickness. In each filter element 3, the cylindrical filters are interconnected at the gas inflow ends thereof by doughnut-like shields 5 to control a flow of exhaust gas in the direction of the arrow A, while being interconnected at the terminal ends by doughnut-like shields 6. Reference numeral 7 represents a cylindrical electric heater formed with a thin metal plate. Each electric heater 7 is disposed in a gap between the adjacent cylindrical filters while being spaced from the latter. The electric heater 7 heats the cylindrical filters located on both sides of the heater and directly heats the particulates which are trapped on the surfaces of the cylindrical filters of the filter element 3. Therefore, a reduced amount of electric energy is consumed for burning the particulates.

The cylindrical filters of the filter elements may be each formed with the three-dimensional mesh structure porous body of heat resistant metal or the metal unwoven cloth.

To evaluate the performances of the DPF thus constructed, two test DPFs were manufactured: one is a DPF E having a trap constructed according to the present invention, viz., a trap having a structure (Fig. 1) consisting of a trio of filter elements (as shown in of Fig. 6) arranged and disposed as shown in Fig. 5, and the other is a DPF F having a trap consisting of a filter 4 whose metal packing density is uniform over its entire length. Initial trapping efficiencies and SOF purification rates of those DFPs were measured by using the DPF performance evaluating system of Fig. 12. The thickness values of the segmental filters of each cylindrical filter or filter layer of each filter element of the DPF E and the thickness of the filter element of the DPF F are as shown in Table 6.

Table 6

| | Filter Thickness (mm) | | |
|---|---|---|---|
| | Filter 4g | Filter 4h | Filter 4i |
| DPF E | 10 | 20 | 30 |
| DPF F | 20 (uniform) | | |

Initial trapping efficiencies of those test DPFs E and F as the results of the measurement are shown in Table 7. In the DPF E of the invention, the thickness of the filter element is increased toward the terminal of filter element. Therefore, a velocity of gas flow passing through the filter element is uniform over its entire length. As seen from the table, the DPF C of the invention successfully clears a target value of 60%. In this respect, the DPF of the invention satisfies the first requirement for the DPF.

Table 7

| | Initial Particulate Trapping Efficiency (%) |
|---|---|
| DPF E | 68 |
| DPF F | 55 |

<Embodiment 4>

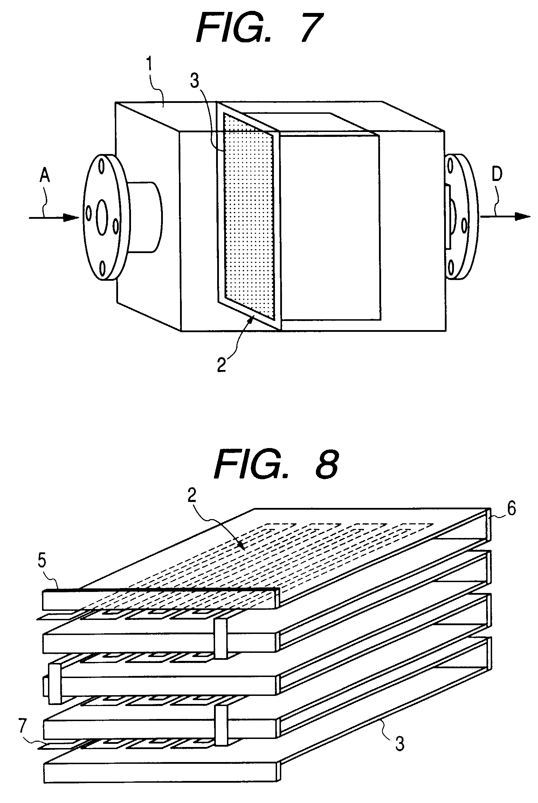

Fig. 7 is a perspective view showing a DPF which is a fourth embodiment of the present invention. Reference numeral 1 designates a case containing a trap 2 connected to an exhaust pipe of a diesel engine. Numeral 3 indicates a plate-like filter element 3. The trap 2 consists of a plural number of plate-like filter elements 3 being stacked one upon another in a multi-layer fashion so as to be tailored to the rectangular prism shape of the case 1, thereby securing the best space utilization. Thin-plate lake electric heaters 7 are each disposed in a gap between the adjacent plate-like filter elements, while being spaced from the latter. Exhaust gas flows in the direction of an arrow A and passes through the filter elements 3. After purified by the filter elements 3, the exhaust gas is exhausted out of the DPF in the direction of an arrow D.

Fig. 8 is a perspective view showing a structure of the trap 2. In the trap, the filter elements 3 are interconnected at the gas inflow ends thereof by doughnut-like shields 5 to control a flow of exhaust gas in the direction of the arrow A, while being interconnected at the terminal ends by doughnut-like shields 6. An electric heater 7 consists of a zig-zag shaped thin plate. The electric heaters 7 are each placed in a gap between the adjacent filter elements 3 while being spaced from the latter.

Fig. 9 is a cross sectional view showing the trap structure of Fig. 8. In the figure, flows of exhaust gas and the details of the filter elements 3 are supplementarily illustrated. As shown, each of the filter elements consists of three segmental filters 4j, 4k and 4l. Those segmental filters 4j to 4l are horizontally arranged side by side from the exhaust gas inflow port to the terminal while being contiguous to one other. Those filters 4j to 4k have different metal packing densities such that the filter 4j has the smallest metal packing density, the filter 4l has the largest metal packing density, and the filter 4k located therebetween has a medium metal packing density. With this unique feature, the velocity of flow of the exhaust gas that passes through the filter elements are uniform over their entire length.

The three-dimensional mesh-like porous body of heat-resistant metal is coated with $\gamma$-alumina to form a catalyst bearing layer. In this case, $\gamma$-alumina of 150g is used for one liter of the filter medium. Platinum (Pt) as SOF catalyst is uniformly layered on the catalyst bearing layer. The SOF catalyst of 1.5g is used for each unit volume. SOF can be removed by the catalyst bearing filter medium.

To evaluate the performances of the DPF thus constructed, two test DPFs were manufactured: one is a DPF G having a trap constructed according to the present invention, viz., a trap having a structure as shown in Fig. 9, and the other is a DPF H having a trap consisting of a filter 4 whose material packing density is uniform over its entire length. Initial trapping efficiencies and SOF purification rates of those DFPs were measured by using the DPF performance evaluating system of Fig. 12. The metal packing densities of the segmental filters of each filter element of the DPF G and the filter element of the DPF H are as shown in Table 8.

Table 8

| | Material packing densities (%) | | |
|---|---|---|---|
| | Filter 4j | Filter 4k | Filter 4l |
| DPF G | 5 | 10 | 15 |
| DPF H | 15 (uniform) | | |

Initial trapping efficiencies of those test DPFs G and H as the results of the measurement are shown in Table 9. In the DPF G of the invention, the metal packing density of each filter element 3 is increased toward the terminal of filter element. Therefore, a velocity of gas flow passing through the filter element is uniform over its entire length. As seen from the table, the metal packing density of the DPF G of the invention successfully clears a target value of 60%. In this respect, the DPF G of the invention satisfies the first requirement for the DPF.

Table 9

| | Initial Particulate Trapping Efficiency (%) |
|---|---|
| DPF G | 63 |
| DPF H | 48 |

Catalyst performances of the DPFs G and H when temperature of the exhaust gas is at 250°C and 350°C are shown in Table 10. The table shows that the DPF G of the invention, which uses the SOF catalyst, is capable of reducing the SOF concentration by 40% or 50%. From this, it is seen that when the DPF G of the invention is used for the exhaust gas purification, there is no need of using a catalytic converter. The DPF G realizes space saving and cost reduction, which form the fifth requirement for the DPF.

Table 10

| | SOF Purification Rate (%) | |
|---|---|---|
| | Exhaust gas temperature at 250° | Exhaust gas temperature at 350° |
| DPF G | 40 | 50 |
| DPF H (no catalyst) | 0 | |

**Claims**

1. A diesel particulate trap wherein:

   a filter is formed by a three-dimensional mesh-like structure porous body or metal unwoven cloth of a heat resistant metal;
   said filter is placed in a case connectable to an exhaust pipe of a diesel engine;
   filter surfaces of said filter are parallel to a direction of a flow of exhaust gas; and
   at least one of a pore diameter, a filter thickness, a material packing density and a mass diameter of said filter varies in the direction of said flow of exhaust gas.

2. The diesel particulate trap according to claim 1, wherein said filter is made up of a plural number of cylindrical members of different diameters being arranged coaxially.

3. The diesel particulate trap according to claim 1, wherein said filter is made up of a plural number of plate-like members.

4. The diesel particulate trap according to any one of claims 1 to 3, wherein the pore diameter of a portion of said filter becomes smaller as the portion approaches closer to a downstream terminal end of said filter in the gas flowing direction.

5. The diesel particulate trap according to any one of claims 1 to 3, wherein the filter thickness of a portion of said filter becomes larger as the portion approaches closer to a downstream terminal end of said filter in the gas flowing direction.

6. The diesel particulate trap according to any one of claims 1 to 3, wherein a material packing density of a portion of said filter becomes larger as the portion approaches closer to a downstream terminal end of said filter in the gas flowing direction.

7. The diesel particulate trap according to any one of claims 1 to 3, wherein a mass diameter of a portion of said filter becomes larger as the portion approaches closer to a downstream terminal end of said filter in the gas flowing direction.

8. The diesel particulate trap according to any one of claims 1 to 3, wherein said filter is made of a three dimensional mesh-like structure porous body of Ni-Cr-Al, and said filter is coated with $\gamma$-alumina to form a catalyst bearing layer, and platinum is uniformly layered over the catalyst bearing layer.

9. A filter for a diesel particulate trap comprising:

   a porous body having a three-dimensional mesh-like structure, said porous body being formed of Ni-Cr-Al;
   a first layer provided on said porous body, said first layer being formed of $\gamma$-alumina; and
   a second layer provided on said first layer, said second layer being formed of Pt.

10. The filter according to claim 9, wherein a pore diameter of a portion of said filter becomes smaller as the portion approaches, from one longitudinal end of said filter, closer to the other opposite longitudinal end thereof.

11. The filter according to claim 9, wherein a filter thickness of a portion of said filter becomes larger as the portion approaches, form one longitudinal end of said filter, closer to the other opposite longitudinal end thereof.

12. The filter according to claim 9, wherein a material packing density of a portion of said filter becomes larger as the portion approaches, from one longitudinal end of said filter, closer to the other opposite longitudinal end thereof.

13. The filter according to claim 9, wherein a mass diameter of a portion of said filter becomes larger as the portion approaches, from one longitudinal end of said filter, closer to the other opposite longitudinal end thereof.

14. A diesel particulate trap wherein:

   a filter is formed by a three-dimensional mesh-like structure porous body or metal unwoven cloth of a heat resistant metal;
   said filter is placed in a case connectable to an exhaust pipe of a diesel engine;
   filter surfaces of said filter are parallel to a direction of a flow of exhaust gas; and
   said filter includes means for making uniform a velocity of flow of gas passing through said filter over its entire length, thereby enhancing particulate collecting efficiency.

15. The diesel particulate trap according to claim 14, wherein said means includes a structure wherein at least one of a pore diameter, a filter thickness, a material packing density and a mass diameter of said filter varies in a lengthwise direction of said filter.

# FIG. 1

# FIG. 2

# FIG. 3

# FIG. 4

# FIG. 5

# FIG. 6

# FIG. 7

# FIG. 8

# FIG. 9

# FIG. 10

# FIG. 11

# FIG. 13

THREE-DIMENSIONAL
MESH-LIKE STRUCTURE
POROUS BODY

MASS DIAMETER

# FIG. 12

CONTROLLER

DIESEL ENGINE CAR

CHASSIS DYNAMOMETER

DILUTED AIR
TEMPERATURE
CONTROLLER

100

DPF

DILUTION TUNNEL
101

BLOWER

EXHAUST GAS
TEMPERATURE
MEASUREMENT
DEVICE

EXHAUST GAS
CONCENTRATION
MEASUREMENT
DEVICE

P

EP 0 849 444 A2